# EUROPEAN PATENT SPECIFICATION

(11) **EP 4 056 437 B1**
(45) Date of publication and mention of the grant of the patent: **25.09.2024**
(21) Application number: 21212906.8
(22) Date of filing: 07.12.2021
(51) Int. Cl.: B60W 10/06, B60W 10/184, B60W 40/11, B60W 30/17, B60W 10/02

(54) **DRIVING CONTROL APPARATUS FOR VEHICLE**
ANTRIEBSSTEUERUNGSVORRICHTUNG FÜR FAHRZEUG
APPAREIL DE COMMANDE D'ENTRAÎNEMENT POUR VÉHICULE

(30) Priority: 09.03.2021 JP 2021037377
(43) Date of publication of application: 14.09.2022
(73) Proprietor: Suzuki Motor Corporation, Shizuoka 432-8611 (JP)
(72) Inventor: EBATA, Tatsuro, Hamamatsu-shi, Shizuoka 432-8611 (JP); WATANABE, Taku, Hamamatsu-shi, Shizuoka 432-8611 (JP)
(74) Representative: Henkel & Partner mbB

(56) References cited:
- GB-A- 2 516 934
- GB-A- 2 519 024
- JP-A- 2016 028 913
- US-A1- 2011 276 216
- US-A1- 2011 307 154
- US-A1- 2017 043 767

## Description

### [Technical Field]

The present invention relates to driving control apparatuses for vehicles, and in particular, relates to a driving control apparatus for a vehicle having an automatic braking function.

### [Background Art]

Driving control apparatuses for vehicles having automatic braking functions, for example, driving control apparatuses having full speed range ACC functions, decelerate a vehicle to a stop by operating automatic braking when the vehicle approaches a vehicle ahead that decelerated to a stop or when a vehicle ahead as a target of following cruise has decelerated to a stop. In order to suppress swing back (pitching vibration) at the time of such deceleration and stop, control to temporarily reduce brake pressure immediately before stopping is known (for example, Patent Literature 1).

[Patent Literature 2] discloses that a vehicle speed control system comprises a low-speed progress control system (LSP) which is operable to cause a vehicle to operate at a target speed value by controlling an amount of brake torque applied by a braking system and an amount of drive torque applied by a powertrain to one or more wheels. The LSP control detects, via sensors, a leading wheel step event in which a leading wheel, e.g. front wheels, encounters an obstacle such as a boulder which presents an abrupt increase in surface gradient. After detection of the obstacle the LSP control applies brake torque against drive torque in anticipation of a trailing wheel step event, e.g. rear wheels encounter the obstacle. The LSP control maintains the brake torque at least until the trailing wheel/s has travelled a sufficient distance to reach a location at which the leading wheel/s experienced the leading wheel step event.

[Patent Literature 3] discloses a vehicle having a controller for controlling an engine and a braking system to decelerate the vehicle based on a detected forward object and an adaptive cruise control mode being active. The controller controls the braking system to apply a braking torque to brake the vehicle to a full stop and hold a vehicle stationary in an absence of powertrain torque based on a current road grade, and auto-stop the engine based on distance to the object falling below a first predefined threshold and vehicle speed falling below a second predefined threshold with the mode being active.

### [Citation List]

### [Patent Literature]

[Patent Literature 1] JP H01-122764 A
[Patent Literature 2] GB 2 516 934 A
[Patent Literature 3] US 2017043767 A

### [Summary of Invention]

### [Problem to be Solved by the Invention]

A vehicle equipped with an AMT type automatic transmission can improve sensation when the vehicle decelerates and stops by disengaging a clutch and disconnecting an engine from a drive shaft side when the vehicle decelerates and stops by an automatic brake. However, when this control and the above-mentioned pitching suppression control were used together on an uphill road, it was recognized that there was a tendency to feel a slight backward movement at a stop position until a braking force increased after brake pressure reduction.

The present invention has been made in view of the above-described circumstances, and an object is to provide a driving control apparatus for a vehicle that can provide the same deceleration-and-stop-time sensation as on a flat road, even on an uphill road.

### [Means for Solving the Problems]

In order to solve the above-described problems, there is provided a driving control apparatus as set out in independent claim 1. Advantageous developments are defined in the dependent claims 2 to 9.

### [Advantageous Effects of Invention]

In the driving control apparatus for a vehicle according to the present invention, as described above, since the predetermined torque request is made to the engine in addition to the pitching suppression control of increasing pressure after temporarily reducing pressure of the braking force when a road surface gradient equal to or greater than the predetermined threshold value is detected when the vehicle decelerates and stops according to a vehicle ahead, the same deceleration-and-stop sensation as on a flat road can be provided without the sensation of a slight backward movement, even on an uphill road.

### [Brief Description of Drawings]

[Figure 1] Figure 1 is a block diagram showing a driving control system of a vehicle.
[Figure 2] Figure 2A, 2B are schematic diagrams showing deceleration and stop of the vehicle on an uphill road.
[Figure 3] Figure 3 is a time chart showing driving control according to an embodiment of the present invention.
[Figure 4] Figure 4 is a flowchart showing the driving control according to the embodiment of the present invention.
[Figure 5] Figure 5 is a flowchart showing control when a brake pedal is operated in the driving control according to the embodiment of the present invention.

### [Mode for Carrying Out the Invention]

Hereinafter, an embodiment of the present invention will be described in detail with reference to the drawings.

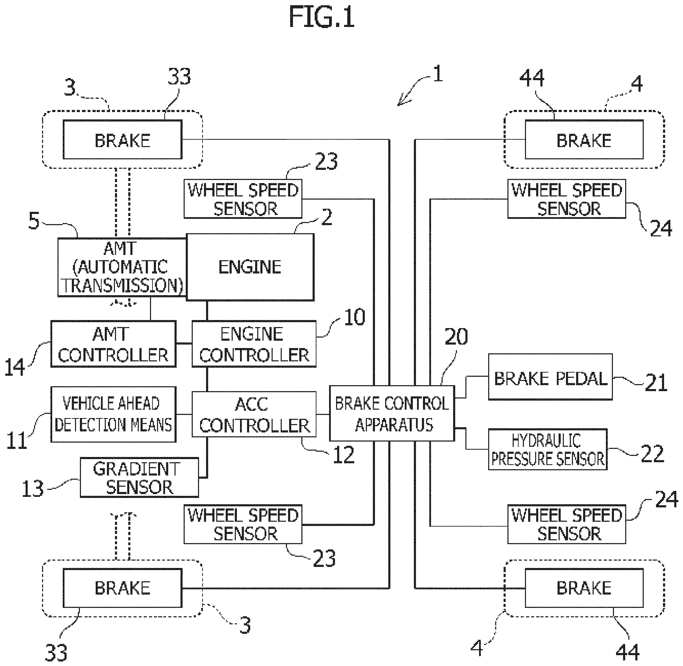

In Figure 1, a vehicle 1 includes an internal combustion engine 2 and an AMT type automatic transmission 5 in a torque transmission path from the engine 2 to drive wheels (3), and also includes an engine controller 10 as engine control means for making a torque request to the engine 2, and an AMT controller 14 that controls a gear shifting operation of the automatic transmission 5 to a gear stage determined based on an engine speed and the torque request, and a clutch opening/closing operation linked thereto.

The vehicle 1 includes a brake system that includes a brake control apparatus 20 (including a brake controller and a brake actuator (hydraulic actuator)) capable of individually controlling the braking force of brakes 33 of left and right front wheels 3 and brakes 44 of left and right rear wheels 4, a brake pedal 21, a hydraulic pressure sensor 22, wheel speed sensors 23 of the left and right front wheels 3 and wheel speed sensors 24 of the left and right rear wheels 4, and forms an ABS/vehicle behavior stabilization apparatus.

The vehicle 1 further includes vehicle ahead detection means 11 that forms an ACC system together with an ACC controller 12. One or more detection means, such as a millimeter wave radar, stereo camera, or LiDAR, that have a function for detecting the presence of a vehicle ahead or an object (obstacle or structure) in front of the vehicle and can measure a relative distance between the vehicle ahead or obstacle and the vehicle can be used for the vehicle ahead detection means 11.

The ACC controller 12 is configured to issue an acceleration/deceleration command to the engine controller 10 and the brake control apparatus 20 instead of the driver's accelerator/brake operation on the basis of a vehicle speed calculated from detection information of the vehicle ahead detection means 11 and detection values of the wheel speed sensors 23 and 24, and perform full speed range adaptive cruise control (constant speed cruise/following cruise control/deceleration stop and restart control).

That is, the brake control apparatus 20 (brake controller) that has received the deceleration command from the ACC controller 12 controls the vehicle speed by issuing a braking request (hydraulic request) to a brake actuator and controlling the braking force of the brakes 33 and 44. The engine controller 10 that has received the acceleration/deceleration command as a torque request to the engine 2 from the ACC controller 12, controls actuator output (degree of throttle opening), thereby controls the torque of the engine 2, and controls the vehicle speed.

By the above-described control of the ACC controller 12, the vehicle 1 performs constant speed cruise while maintaining a set vehicle speed when there is no vehicle ahead, and when catching up with a vehicle ahead, performs following cruise to the vehicle ahead while maintaining an inter-vehicle distance corresponding to a predetermined inter-vehicle time (time gap = inter-vehicle distance / vehicle speed) according to the speed of the vehicle ahead. Furthermore, when the vehicle ahead decelerates and stops while the vehicle 1 is performing following cruise or the vehicle 1 approaches the vehicle ahead that has decelerated and stopped, the vehicle 1 decelerates and stops while ensuring the predetermined inter-vehicle distance, and when the vehicle ahead starts within a predetermined time, restarts accordingly and continues the following cruise.

The engine controller 10, AMT controller 14, brake controller of the brake control apparatus 20, and ACC controller 12 described above each include a microcomputer (MCU) composed of a ROM for storing a control program, setting data or the like, a RAM for temporarily storing arithmetic processing results, a CPU for performing arithmetic processing, a communication interface (I/F), and the like, and are connected with each other intercommunicatively together with the vehicle ahead detection means 11 and a sensor group including a gradient sensor 13 described below via an on-vehicle network (such as a CAN).

The vehicle 1 according to the embodiment of the present invention includes a gradient sensor 13 as gradient detection means for detecting a road surface gradient. As the gradient sensor 13, a gradient sensor for detecting a gradient in the front-rear direction of the vehicle 1 on the basis of gravitational acceleration, an acceleration sensor, a multi-axis inertia sensor, or the like can be used.

### (Improved Deceleration Stop Control)

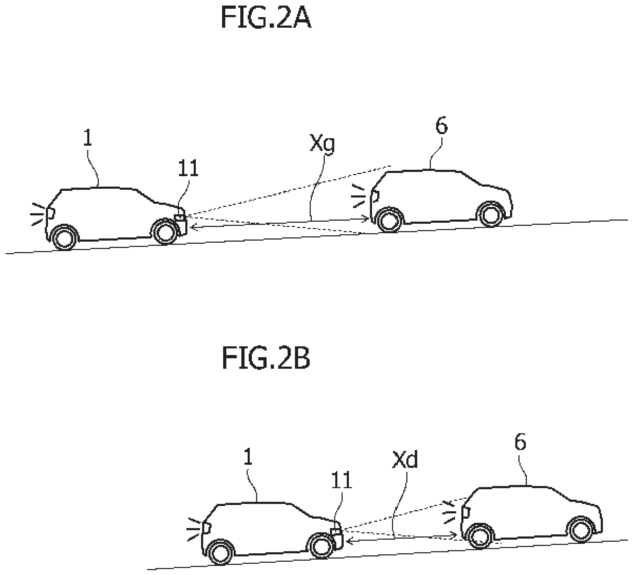

The driving control system according to the present invention is characterized by deceleration stop control in an ACC function performed by the ACC controller 12, and performs deceleration stop control in consideration of the road surface gradient detected by the gradient sensor 13 in addition to the detection information of the vehicle ahead detection means 11. Hereinafter, improved deceleration stop control will be described with reference to Figures 2-4.

First, as shown in Figure 2A, when the vehicle ahead 6 decelerates and stops while the vehicle is performing following cruise at a predetermined set inter-vehicle time Xg to a vehicle ahead 6 detected by the vehicle ahead detection means 11, or the vehicle approaches the vehicle ahead 6 that decelerates and stops, the ACC controller 12 issues a deceleration command.

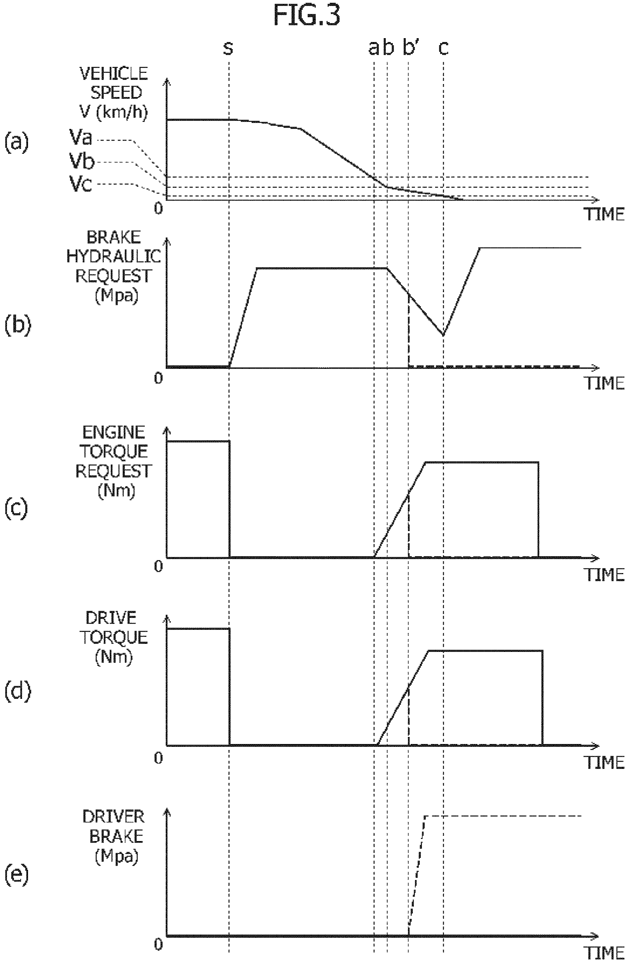

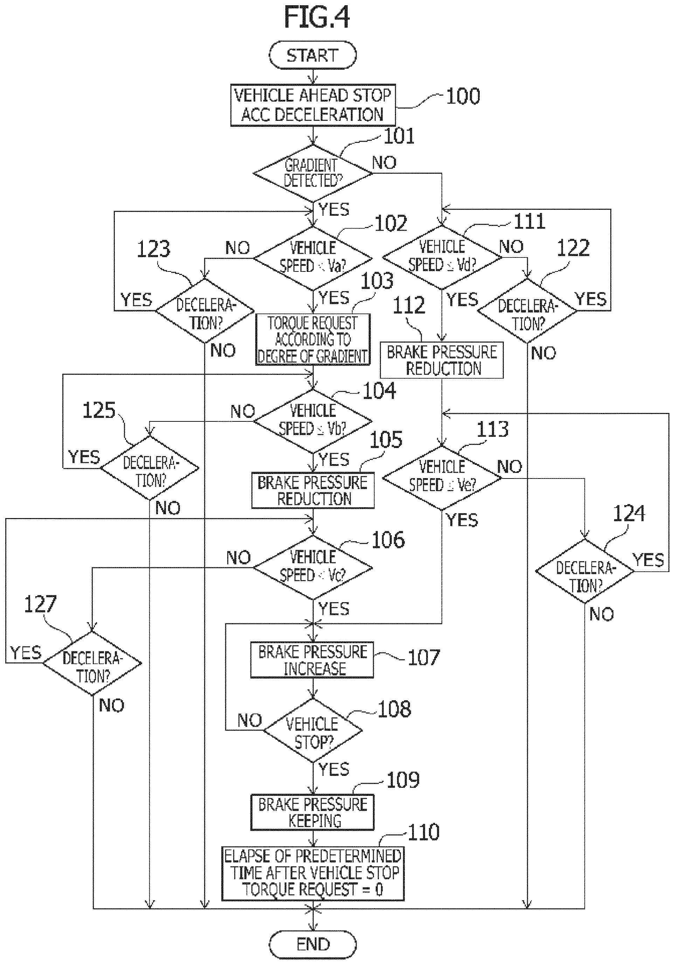

As shown in Figure 3, a brake hydraulic pressure rises due to a braking request and a braking force starts to act; on the other hand, at the same time as a torque request to the engine 2 becomes zero, a clutch of the automatic transmission 5 is disengaged, a drive torque transmitted to a drive shaft becomes zero, and the vehicle 1 starts decelerating at a predetermined deceleration according to the braking request (Figure 4, step 100).

After that, as shown in Figure 2B, in a case of a sloped road about which a road surface gradient equal to or greater than a predetermined threshold value (for example, 3%) is detected by the gradient sensor 13 (YES in step 101 in Figure 4) immediately before the vehicle 1 stops while ensuring an inter-vehicle distance Xd from the vehicle ahead 6, a required value of creep torque (torque that makes the vehicle 1 stand still against the road surface gradient) that compensates for the road surface gradient is calculated.

Next, a torque request is issued to the engine 2 on the basis of the required value (Figure 4, step 103) when the vehicle 1 reaches a first vehicle speed Va (for example, 3 km/h) immediately before stopping (point a in Figure 3 and YES in step 102 in Figure 4), and at the same time, a fastening force is applied to the clutch of the automatic transmission 5, and the torque begins to be transmitted to the drive shaft.

Although the torque transmission starts together with such a torque request and clutch fastening, the braking force of the brakes further decelerates the vehicle 1, and when a second vehicle speed Vb (for example, 2 km/h) is reached (point b in Figure 3 and YES in step 104 in Figure 4), a brake pressure is temporarily reduced (point b in Figure 3 and step 105 in Figure 4).

By the increase in the drive torque and the reduction in the brake pressure, the deceleration of the vehicle 1 is mitigated; when the vehicle 1 reaches a third speed Vc (for example, 1 km/h) regarded as substantially a stopped state (point c in Figure 3 and YES in step 106 in Figure 4), the brake pressure is increased (step 107 in Figure 4); and even after the vehicle 1 completely stops (YES in step 108) and the increase in the brake pressure is completed, the brake pressure is maintained (step 109). In the elapse of a predetermined time after stopping, the torque request becomes zero, and at the same time, the clutch of the automatic transmission 5 is disengaged (step 110 in Figure 4).

On the other hand, in a case of a flat road for which the road surface gradient detected by the gradient sensor 13 is less than the predetermined threshold value (for example, 3%) (NO in step 101 in Figure 4) immediately before the vehicle 1 stops while ensuring the predetermined inter-vehicle distance Xd from the vehicle ahead 6, the brake pressure is temporarily reduced (step 112 in Figure 4) when the predetermined vehicle speed Vd (for example, 1.5 km/h) is reached (YES in step 111 in Figure 4); then when the vehicle 1 reaches the third speed Vc (for example, 0.5 km/h) regarded as substantially a stopped state (YES in step 113 in Figure 4), the brake pressure is increased (step 107 in Figure 4), and the vehicle 1 is completely stopped (steps 108-109).

In Figure 4, in each step 123, 125 or 127 in the case in which it is determined there is a gradient in step 101 or in each step 122 or 124 in the case in which it is determined there is no gradient, when the deceleration command from the ACC controller 12 is stopped due to start of the vehicle ahead 6 or the like, the deceleration stop control ends at that time point, and the operation returns to ACC control. When the vehicle ahead 6 starts after deceleration stop, depression of the accelerator pedal or a predetermined button operation makes the operation return to the ACC control.

### (Brake Operation during Deceleration Stop Control)

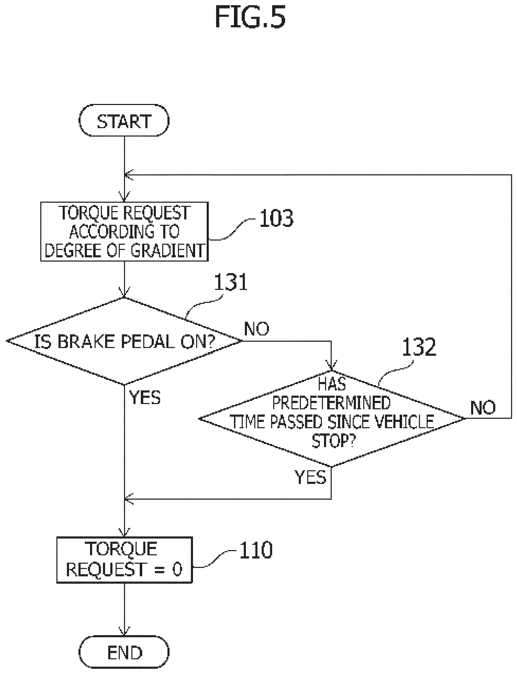

After the torque request according to the road surface gradient is issued in step 103 in Figure 4 and the clutch of the automatic transmission 5 is fastened (for example, point b' in Figure 3), as shown in Figure 5, when the brake pedal 21 is depressed by the driver, and a brake pedal ON signal is detected (step 131), the torque request immediately becomes zero in order to avoid engine stall, and at the same time, the clutch of the automatic transmission 5 is disengaged (step 110).

In this case, it is determined that control by the ACC controller 12 is overridden by the driver's brake pedal operation, and the driver may be notified of ACC cancellation by an HMI apparatus and the shift to manual operation may be performed or the ACC control may be continued by the specified button operation or accelerator pedal operation, as described above.

### (Operation and Effects)

As detailed above, in the driving control system according to the present invention, since the predetermined torque request is made in parallel with the control of increasing pressure after temporarily reducing pressure of the braking force when a road surface gradient equal to or greater than the predetermined threshold value is detected when the vehicle 1 reaches the first vehicle speed Va based on which the vehicle 1 is determined to be immediately before stopping, the vehicle 1 can stop in a state in which torque is applied in the uphill direction while suppressing pitching at the time of decelerating and stopping, and the same deceleration-and-stop sensation as on a flat road can be provided without sensation of a slight backward movement, even on an uphill road.

In particular, by starting the control of increasing pressure after temporarily reducing pressure of the braking force at a second time point when the vehicle reaches the second vehicle speed Vb that is slower than the first vehicle speed Va after the predetermined torque request at a first time point when the vehicle reaches the first vehicle speed Va based on which the vehicle is determined to be immediately before stopping, the vehicle can be stopped in a state in which the torque is reliably applied before the temporary reduction in the braking force.

Although the vehicle 1 equipped with the AMT type automatic transmission 5 performs fastening processing of the clutch at the same time as the torque request, a fastening force is applied to the clutch immediately before the braking force is increased and a time to generate a driving force (creep torque) is very short, and so the load on the clutch is small and there is no effect on the clutch due to heat generation.

A torque request when a road surface gradient equal to or greater than the predetermined threshold value is detected is preferably a torque request corresponding to a torque for making the vehicle stand still against the road surface gradient. However, it is not necessary to be a request value to strictly balance, a compensation torque request value is set according to the road surface gradient within a range in which the torque request is not excessive. For example, the compensation torque is set to be greater in proportion to the road surface gradient, and it is advantageous to prepare a compensation torque request value corresponding to the road surface gradient as a lookup table.

It is also possible to obtain acceleration of the vehicle 1 and slip ratios of the wheels from wheel speeds detected by the wheel speed sensors 23 and 24, estimate a road surface friction coefficient (road surface µ), and switch the compensation torque request value (lookup table) according to the road surface state.

In the above embodiment, in the vehicle 1 equipped with the AMT type automatic transmission 5 in the torque transmission path from the engine 2 to the drive wheels (3), the clutch of the automatic transmission 5 is disengaged at the same time as the torque request becomes zero, and the clutch is fastened at the same time as the torque request. However, the present invention can also be implemented in a vehicle equipped with another type of automatic transmission, such as a CTV type, which is weaker than a force to balance the gradient.

Furthermore, the embodiment describes the case in which the present invention is implemented in the vehicle 1 having the ACC function. However, the present invention can also be implemented in a vehicle having an automated lane keeping function (automated driving function) including the ACC function.

### [Reference Signs List]

1 Vehicle
2 Engine
5 Automatic transmission
10 Engine controller
11 Vehicle ahead detection means
12 ACC controller
13 Gradient sensor
14 AMT controller
20 Brake control apparatus
21 Brake pedal
22 Hydraulic pressure sensor
23, 24 Wheel speed sensor
33, 44 Brake

## Claims

1. A driving control apparatus (12) for a vehicle (1) comprising: engine control means (10) for controlling an engine (2) according to a torque request, brake control means (20) for controlling a braking force of a break according to a braking request, gradient detection means (13) for detecting a road surface gradient, and vehicle ahead detection means (11) for detecting a vehicle ahead (6),
the driving control apparatus (12) having a function for decelerating and stopping with maintaining a predetermined inter-vehicle distance when the vehicle ahead (6) detected by the vehicle ahead detection means (11) decelerates to a stop, and being **characterized in that** it is configured to perform pitching suppression control of increasing pressure after temporarily reducing pressure of the braking force immediately before the vehicle (1) stops,
wherein the driving control apparatus (12) is further configured to make a predetermined torque request in parallel with the pitching suppression control in a case in which a road surface gradient equal to or greater than a predetermined threshold value is detected by the gradient detection means (13) when the vehicle (1) reaches a first vehicle speed (Va) based on which the vehicle (1) is determined to be immediately before stopping.

2. The driving control apparatus (12) for the vehicle (1) according to claim 1, wherein the torque request is set to zero and a predetermined braking request is made in order to decelerate and stop the vehicle (1) when the vehicle ahead (6) decelerates and stops, the predetermined torque request is made in a case in which a road surface gradient equal to or greater than the predetermined value is detected by the gradient detection means (13) at a first time point when the vehicle (1) reaches the first vehicle speed (Va) based on which the vehicle (1) is determined to be immediately before stopping, and at the same time or a second time point when the vehicle (1) reaches a second vehicle speed (Vb) that is slower than the first vehicle speed (Va), the pitching suppression control of increasing pressure after temporarily reducing pressure of the braking force is started.

3. The driving control apparatus (12) for the vehicle (1) according to claim 1 or 2, wherein the torque request in the case in which the road surface gradient equal to or greater than the predetermined threshold value is detected is corresponding to a torque for making the vehicle (1) stand still against the road surface gradient.

4. The driving control apparatus (12) for the vehicle (1) according to any one of claims 1 to 3, wherein the torque request in the case in which the road surface gradient equal to or greater than the predetermined threshold value is detected is set to zero at elapse of a predetermined time after the vehicle (1) stops.

5. The driving control apparatus (12) for the vehicle (1) according to any one of claims 1 to 4, wherein the torque request is set to zero when a brake pedal (21) is operated after the torque request in the case in which the road surface gradient equal to or greater than the predetermined threshold value is detected.

6. The driving control apparatus (12) for the vehicle (1) according to claim 2 or 3, wherein:
an AMT type automatic transmission (5) is provided in a torque transmission path from the engine (2) to drive wheels; and
a clutch of the automatic transmission (5) is disengaged at the same time as the torque request is set to zero when the vehicle ahead (6) decelerated to a stop, and the clutch is engaged at the same time as the predetermined torque request in the case in which the road surface gradient equal to or greater than the predetermined threshold value is detected by the gradient detection means (13) at the first time point.

7. The driving control apparatus (12) for the vehicle (1) according to claim 6, wherein the torque request in the case in which the road surface gradient equal to or greater than the predetermined threshold value is detected is set to zero at elapse of a predetermined time after the vehicle (1) stops, and at the same time the clutch is disengaged.

8. The driving control apparatus (12) for the vehicle (1) according to claim 6 or 7, wherein the torque request is set to zero when a brake pedal (21) is operated after the torque request in the case in which the road surface gradient equal to or greater than the predetermined threshold value is detected, and at the same time, the clutch is disengaged.

9. The driving control apparatus (12) for the vehicle (1) according to any one of claims 1 to 8, wherein the torque request is kept at zero when a detection value of the gradient detection means (13) is less than the predetermined threshold value when the vehicle (1) reaches the first vehicle speed (Va) based on which the vehicle (1) is determined to be immediately before stopping.

## Patentansprüche

1. Eine Antriebssteuervorrichtung (12) für ein Fahrzeug (1), umfassend: eine Motorsteuereinrichtung (10) zum Steuern eines Motors (2) gemäß einer Drehmomentanforderung, eine Bremssteuereinrichtung (20) zum Steuern einer Bremskraft einer Bremse gemäß einer Bremsanforderung, eine Neigungserfassungseinrichtung (13) zum Erfassen einer Straßenoberflächenneigung, und eine Fahrzeugvoraus-Erfassungseinrichtung (11) zum Erfassen eines vorausfahrenden Fahrzeugs (6),
wobei die Antriebssteuervorrichtung (12) eine Funktion zum Verlangsamen und Anhalten unter Aufrechterhaltung eines vorbestimmten Zwischenfahrzeugabstands hat, wenn das vorausfahrende Fahrzeug (6), das von der Fahrzeugvoraus-Erfassungseinrichtung (11) erfasst wird, bis zu einem Stopp verlangsamt, und **dadurch gekennzeichnet, dass** sie konfiguriert ist, um eine Nickunterdrückungssteuerung eines Druckanstiegs nach vorübergehender Reduzierung eines Drucks der Bremskraft unmittelbar vor dem Anhalten des Fahrzeugs (1) durchzuführen,
wobei die Antriebssteuervorrichtung (12) ferner konfiguriert ist, um eine vorbestimmte Drehmomentanforderung parallel zu der Nickunterdrückungssteuerung in einem Fall durchzuführen, in dem eine Straßenoberflächenneigung, die gleich oder größer als ein vorbestimmter Schwellenwert ist, durch die Neigungserfassungseinrichtung (13) erfasst wird, wenn das Fahrzeug (1) eine erste Fahrzeuggeschwindigkeit (Va) erreicht, basierend auf der bestimmt wird, dass das Fahrzeug (1) unmittelbar vor dem Anhalten ist.

2. Die Antriebssteuervorrichtung (12) für das Fahrzeug (1) nach Anspruch 1, wobei die Drehmomentanforderung auf Null gesetzt wird und eine vorbestimmte Bremsanforderung gemacht wird, um das Fahrzeug (1) zu verlangsamen und anzuhalten, wenn das vorausfahrende Fahrzeug (6) verlangsamt und anhält, die vorbestimmte Drehmomentanforderung in einem Fall gemacht wird, in dem eine Straßenoberflächenneigung, die gleich oder größer als der vorbestimmte Wert ist, durch die Neigungserfassungseinrichtung (13) zu einem ersten Zeitpunkt erfasst wird, wenn das Fahrzeug (1) die erste Fahrzeuggeschwindigkeit (Va) erreicht, basierend auf der das Fahrzeug (1) als unmittelbar vor dem Anhalten befindlich bestimmt wird, und zu der gleichen Zeit oder zu einem zweiten Zeitpunkt, wenn das Fahrzeug (1) eine zweite Fahrzeuggeschwindigkeit (Vb) erreicht, die langsamer als die erste Fahrzeuggeschwindigkeit (Va) ist, die Neigungsunterdrückungssteuerung des Druckanstiegs nach vorübergehender Druckreduzierung der Bremskraft gestartet wird.

3. Die Antriebssteuervorrichtung (12) für das Fahrzeug (1) nach Anspruch 1 oder 2, wobei die Drehmomentanforderung in dem Fall, in dem die Straßenoberflächenneigung gleich oder größer als der vorbestimmte Schwellenwert erfasst wird, zu einem Drehmoment korrespondiert, um das Fahrzeug (1) gegen die Straßenoberflächenneigung zum Stillstand zu bringen.

4. Die Antriebssteuervorrichtung (12) für das Fahrzeug (1) nach einem der Ansprüche 1 bis 3, wobei die Drehmomentanforderung in dem Fall, in dem die Straßenoberflächenneigung gleich oder größer als der vorbestimmte Schwellenwert erfasst wird, nach Ablauf einer vorbestimmten Zeit nach dem Anhalten des Fahrzeugs (1) auf Null gesetzt wird.

5. Die Antriebssteuervorrichtung (12) für das Fahrzeug (1) nach einem der Ansprüche 1 bis 4, wobei die Drehmomentanforderung auf Null gesetzt wird, wenn ein Bremspedal (21) nach der Drehmomentanforderung in dem Fall betrieben wird, in dem die Straßenoberflächenneigung gleich oder größer als der vorbestimmte Schwellenwert erfasst wird.

6. Die Antriebssteuervorrichtung (12) für das Fahrzeug (1) nach Anspruch 2 oder 3, wobei:
ein Automatikgetriebe (5) vom Typ AMT in einem Drehmomentübertragungsweg von dem Motor (2) zum Antreiben von Rädern vorgesehen ist; und
eine Kupplung des Automatikgetriebes (5) zu der gleichen Zeit ausgerückt wird, zu der die Drehmomentanforderung auf Null gesetzt wird, wenn das vorausfahrende Fahrzeug (6) bis zu einem Stopp verlangsamt wird, und die Kupplung zu der gleichen Zeit wie die vorbestimmte Drehmomentanforderung in dem Fall eingerückt wird, in dem die Straßenoberflächenneigung, die gleich oder größer als der vorbestimmte Schwellenwert ist, durch die Neigungserfassungseinrichtung (13) zu dem ersten Zeitpunkt erfasst wird.

7. Die Antriebssteuervorrichtung (12) für das Fahrzeug (1) nach Anspruch 6, wobei die Drehmomentanforderung in dem Fall, in dem die Straßenoberflächenneigung gleich oder größer als der vorbestimmte Schwellenwert erfasst wird, nach Ablauf einer vorbestimmten Zeit nach dem Stopp des Fahrzeugs (1) auf Null gesetzt wird und zu der gleichen Zeit die Kupplung ausgerückt wird.

8. Die Antriebssteuervorrichtung (12) für das Fahrzeug (1) nach Anspruch 6 oder 7, wobei die Drehmomentanforderung auf Null gesetzt wird, wenn ein Bremspedal (21) nach der Drehmomentanforderung in dem Fall betrieben wird, in dem die Straßenoberflächenneigung gleich oder größer als der vorbestimmte Schwellenwert erfasst wird, und zu der gleichen Zeit die Kupplung ausgerückt wird.

9. Die Antriebssteuervorrichtung (12) für das Fahrzeug (1) nach einem der Ansprüche 1 bis 8, wobei die
Drehmomentanforderung auf Null gehalten wird, wenn ein Erfassungswert der Neigungserfassungseinrichtung (13) kleiner als der vorbestimmte Schwellenwert ist, wenn das Fahrzeug (1) die erste Fahrzeuggeschwindigkeit (Va) erreicht, basierend auf der bestimmt wird, dass das Fahrzeug (1) unmittelbar vor dem Anhalten ist.

## Revendications

1. Appareil de commande d'entraînement (12) pour un véhicule (1) comprenant : des moyens formant commande de moteur (10) pour commander un moteur (2) en fonction d'une demande de couple, des moyens formant commande de frein (20) pour commander une force de freinage d'un frein en fonction d'une demande de freinage, des moyens de détection de gradient (13) pour détecter un gradient de surface de route, et des moyens de détection d'avant de véhicule (11) pour détecter un avant de véhicule (6),
l'appareil de commande d'entraînement (12) présentant une fonction pour décélérer et s'arrêter avec maintien d'une distance entre les véhicules prédéterminée lorsque l'avant de véhicule (6) détecté par les moyens de détection d'avant de véhicule (11) décélère jusqu'à un arrêt, et étant **caractérisé en ce qu'**il est configuré pour réaliser une commande de suppression de tangage consistant à augmenter la pression après une réduction temporaire de la pression de la force de freinage immédiatement avant que le véhicule (1) s'arrête,
dans lequel l'appareil de commande d'entraînement (12) est en outre configuré pour faire une demande de couple prédéterminée en parallèle avec la commande de suppression de tangage dans un cas dans lequel un gradient de surface de route supérieur ou égal à une valeur de seuil prédéterminée est détecté par les moyens de détection de gradient (13) lorsque le véhicule (1) atteint une première vitesse de véhicule (Va) sur la base de laquelle le véhicule (1) est déterminé comme étant immédiatement avant l'arrêt.

2. Appareil de commande d'entraînement (12) pour le véhicule (1) selon la revendication 1, dans lequel la demande de couple est réglée sur zéro et une demande de freinage prédéterminée est faite afin de décélérer et d'arrêter le véhicule (1) lorsque l'avant de véhicule (6) décélère et s'arrête, la demande de couple prédéterminée est faite dans un cas dans lequel un gradient de surface de route supérieur ou égal à la valeur prédéterminée est détecté par les moyens de détection de gradient (13) à un premier moment où le véhicule (1) atteint la première vitesse de véhicule (Va) sur la base de laquelle le véhicule (1) est déterminé comme étant immédiatement avant l'arrêt, et au même moment ou à un deuxième moment où le véhicule (1) atteint une deuxième vitesse de véhicule (Vb) qui est inférieure à la première vitesse de véhicule (Va), la commande de suppression de tangage consistant à augmenter la pression après la réduction temporaire de la pression de la force de freinage est démarrée.

3. Appareil de commande d'entraînement (12) pour le véhicule (1) selon la revendication 1 ou 2, dans lequel la demande de couple dans le cas dans lequel le gradient de surface de route supérieur ou égal à la valeur de seuil prédéterminée est détecté correspond à un couple pour faire s'immobiliser le véhicule (1) à l'encontre du gradient de surface de route.

4. Appareil de commande d'entraînement (12) pour le véhicule (1) selon l'une quelconque des revendications 1 à 3, dans lequel la demande de couple dans le cas dans lequel le gradient de surface de route supérieur ou égal à la valeur de seuil prédéterminée est détecté est réglée sur zéro à l'écoulement d'un temps prédéterminé après que le véhicule (1) s'est arrêté.

5. Appareil de commande d'entraînement (12) pour le véhicule (1) selon l'une quelconque des revendications 1 à 4, dans lequel la demande de couple est réglée sur zéro lorsqu'une pédale de frein (21) est actionnée après la demande de couple dans le cas dans lequel le gradient de surface de route supérieur ou égal à la valeur de seuil prédéterminée est détecté.

6. Appareil de commande d'entraînement (12) pour le véhicule (1) selon la revendication 2 ou 3, dans lequel :
une transmission automatique (5) de type boîte de vitesse automatisée est prévue dans une voie de transmission de couple à partir du moteur (2) pour entraîner les roues ; et
un embrayage de la transmission automatique (5) est désaccouplé au moment même où la demande de couple est réglée sur zéro lorsque l'avant de véhicule (6) a décéléré jusqu'à un arrêt, et l'embrayage est désaccouplé au moment même où la demande de couple prédéterminée dans le cas dans lequel le gradient de surface de route supérieur ou égal à la valeur de seuil prédéterminée est détecté par les moyens de détection de gradient (13) au premier moment.

7. Appareil de commande d'entraînement (12) pour le véhicule (1) selon la revendication 6, dans lequel la demande de couple dans le cas dans lequel le gradient de surface de route supérieur ou égal à la valeur de seuil prédéterminée est détecté est réglée sur zéro à l'écoulement d'un moment prédéterminé après que le véhicule (1) s'est arrêté, et au même moment l'embrayage est désaccouplé.

8. Appareil de commande d'entraînement (12) pour le véhicule (1) selon la revendication 6 ou 7, dans lequel la demande de couple est réglée sur zéro lorsqu'une pédale de frein (21) est actionnée après la demande de couple dans le cas dans lequel le gradient de surface de route supérieur ou égal à la valeur de seuil prédéterminée est détecté, et au même moment, l'embrayage est désaccouplé.

9. Appareil de commande d'entraînement (12) pour le véhicule (1) selon l'une quelconque des revendications 1 à 8, dans lequel la demande de couple est maintenue à zéro lorsqu'une valeur de détection des moyens de détection de gradient (13) est inférieure à la valeur de seuil prédéterminée lorsque le véhicule (1) atteint la première vitesse de véhicule (Va) sur la base de laquelle le véhicule (1) est déterminé comme étant immédiatement avant l'arrêt.
